Europäisches Patentamt

European Patent Office

Office européen des brevets

(11) Publication number: **0 500 220 A2**

# EUROPEAN PATENT APPLICATION

(21) Application number: **92300685.2**

(22) Date of filing: **27.01.92**

(51) Int. Cl.⁵: **H04N 1/46**

(30) Priority: **18.02.91 IL 97272**

(43) Date of publication of application:
**26.08.92 Bulletin 92/35**

(84) Designated Contracting States:
**AT BE CH DE DK ES FR GB GR IT LI LU MC NL PT SE**

(71) Applicant: **SCITEX CORPORATION LTD.**
**7 Hamada Street**
**Herzliya 46103(IL)**

(72) Inventor: **Melman, Haim**
**3 Hagai Street**
**Kfar Sava(IL)**
Inventor: **Shalev, Eli**
**10 Ostashinsky Street**
**Kfar Sava(IL)**

(74) Representative: **Hillier, Peter et al**
**Reginald W. Barker & Co., 13, Charterhouse Square**
**London, EC1M 6BA(GB)**

(54) **Apparatus and method for separating transparencies.**

(57) Apparatus for separating a colored picture represented upon a transparent medium into a multiplicity of color separations including a plurality of colored light sources generally corresponding to at least some of the multiplicity of color separations for projecting light through the transparent medium, apparatus for combining the light from the plurality of light sources onto a common optical path, a detector, having an optical axis coincident to the common optical path, for detecting light falling thereon, and apparatus for sequentially operating at least some of the plurality of light sources, thereby producing the multiplicity of color separations.

FIG.1B

FIELD OF THE INVENTION

The present invention relates to fluorescent illumination generally, and to apparatus and a method for color separation applications of color pictures in particular.

BACKGROUND OF THE INVENTION

Scanning methods are reviewed generally in R. K. Molla, Electronic Color Separation, R. K. Printing & Publishing, New York, 1988, the disclosure of which is incorporated herein by reference. The principles of color are explained in G. Wysezecki and W. S. Stiles, Color Science, Wiley and Sons, 1982, the disclosure of which is incorporated herein by reference.

Fluorescent lamps are useful in many applications, such as for line illumination in color separation scanners. Normally, a single lamp is used in which a plurality of phosphors have been blended to produce a desired spectral distribution. The intensity of the resulting illumination is mainly limited by the efficiency of the discharge current.

It is desirable in many applications that the intensity of the illumination provided by a lamp be as great as possible. For example, a known color separation method for transparency scanning applications employs a "white" light source and a plurality of colored filters which are sequentially placed in front of a detector. For example, for Red, Green and Blue (RBG) color separation applications, a red filter, a green filter and a blue filter provide sequential transmission of the red, the green and the blue portions of the spectrum of white light respectively. An important disadvantage of this method is that the light energy efficiency is theoretically only about one-third, since each of the filter "wastes" about two thirds of the light energy and only transmits about one-third thereof. Practically speaking, the light energy efficiency is generally even less than one-third, typically about 25% of the light energy of the light source employed.

United States Patent 4,535,394 to Dugre describes an illumination configuration comprising a plurality of white light sources in operative association with a plurality of absorption and dichroic filters which allow a user to control the color of a resulting beam by varying the intensity of selected ones of the plurality of light sources. The light energy efficiency of the configuration is also usually less than a third.

United States Patents 4,642,679 to Nagano and 4,658,289 to Nagano et al disclose a method of illumination which is useful for performing light source color separation for a colored picture represented upon a reflective medium. Three aperture fluorescent lamps are provided, which are red, green and blue for RGB color separation applications, and are arranged to illuminate a particular line within the colored picture. For each particular line, the three lamps are sequentially flashed and a detector is used to integrate the color energy provided by each of the three flashes. However, this method is inoperative for scanning colored pictures represented on a transparent medium such as a transparency. In transparency applications, the light must be propagated along the optical axis of the lens, within the numerical aperture spanned thereby.

Providing a housing for a light source and reflecting of the light from the light source off of the housing is also known, but is relatively inefficient. As little as 10% of the light provided by the light source may be usefully reflected off the housing.

Published European Patent Application 0322070 discloses an illumination system for creating a colored image, the system comprising configurations of three white light point sources and dichroic filters. Only about one-third of the total energy of each lamp may be utilized. Therefore, the total output of these configurations is approximately the same as the output of a single light source, and may be even less.

SUMMARY OF THE INVENTION

The present invention seeks to provide apparatus and a method for providing high intensity fluorescent illumination. In general the apparatus can include any colored light source, such as a light emitting diode (LED) and has no dynamic mechanical features.

The present invention also seeks to provide apparatus and a method for color separation applications for a colored picture represented on a transparency.

There is thus provided in accordance with a preferred embodiment of the present invention apparatus for separating a colored picture represented upon a transparent medium into a multiplicity of color separations including a plurality of colored light sources generally corresponding to at least some of the multiplicity of color separations for projecting light through the transparent medium, apparatus for combining the light from the plurality of light sources onto a common optical path, a detector, having an optical axis coincident to the common optical path, for detecting light falling thereon, and apparatus for sequentially operating at least some of the plurality of light sources, thereby producing the multiplicity of color separations.

Further in accordance with the present invention the apparatus also includes a lens for focussing the light projected through the transparent medium onto the detector.

Further in accordance with the present invention the plurality of colored light sources include three colored light sources.

Additionally in accordance with the present invention the three colored light sources are red, blue and green light sources.

Further in accordance with the present invention the plurality of light sources includes at least one fluorescent lamp.

Still further in accordance with the present invention the plurality of light sources includes at least one aperture fluorescent lamp.

Additionally in accordance with the present invention the plurality of light sources includes at least one LED array.

Further in accordance with the present invention the plurality of light sources includes a light guide operatively associated with the LED array.

Additionally in accordance with the present invention at least two of the plurality of light sources produce images which substantially coincide along the optical axis.

Further in accordance with the present invention all of the plurality of light sources produce images which substantially coincide along the optical axis.

Additionally in accordance with the present invention there is generally no overlap between wavelength ranges of light emitted by any two of the plurality of light sources.

Further in accordance with the present invention generally any particular color of light may be produced by a particular combination of light emitted by the plurality of light sources.

Further in accordance with the present invention at least one of the plurality of light sources emits substantially white light.

Additionally in accordance with the present invention the apparatus for combining includes a dichroic filter.

Additionally in accordance with the present invention the apparatus for combining is a filter including a colored glass substrate and a dichroic coating.

There is also provided according to in accordance with a preferred embodiment of the present invention a method for separating a colored picture represented upon a transparent medium into a multiplicity of color separations. The method includes the steps of providing a plurality of colored light sources generally corresponding to at least some of the multiplicity of color separations, combining the light of the plurality of light sources along a common optical path, and sequentially operating at least some of the plurality of light sources, thereby producing the multiplicity of color separations.

Further in accordance with the present invention the step of sequentially operating at least some of the plurality of light sources includes the step of simultaneously operating at least two light sources.

Still further in accordance with the present invention the transparent medium is scanned with a line interlace sequence.

Additionally in accordance with the present invention the transparent medium is scanned with a page interlace sequence.

BRIEF DESCRIPTION OF THE DRAWINGS

The present invention will be understood and appreciated from the following detailed description, taken in conjunction with the drawings in which:

Fig. 1A is an illustration of three-lamp illumination apparatus which is constructed and operative in accordance with an embodiment of the present invention;

Fig. 1B is an illustration of a preferred embodiment of the three-lamp illumination apparatus constructed and operative in accordance with a preferred embodiment of the present invention;

Fig. 2 is an illustration of four-lamp illumination apparatus which is constructed and operative in accordance with a preferred embodiment of the present invention;

Fig. 3 is an illustration of seven-lamp illumination apparatus which is constructed and operative in accordance with a preferred embodiment of the present invention;

Fig. 4 is an illustration of illumination apparatus constructed and operative in accordance with a preferred embodiment of the present invention in which some of the light sources comprise a LED array; and

Fig. 5 is an illustration of an LED array useful in the embodiment of Fig. 4.

DETAILED DESCRIPTION OF PREFERRED EMBODIMENTS

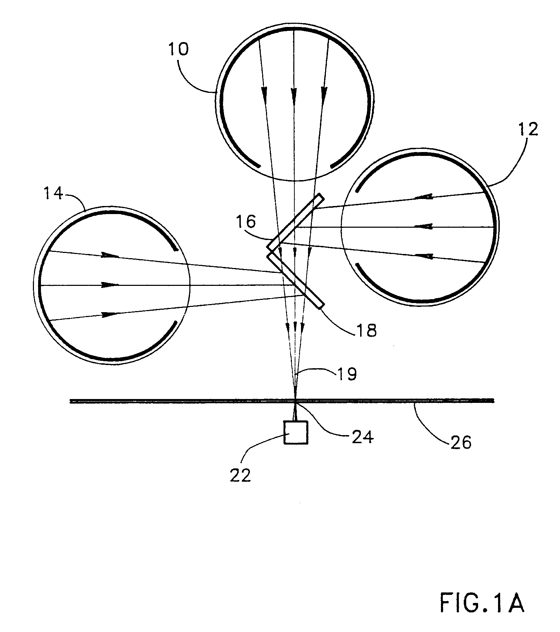

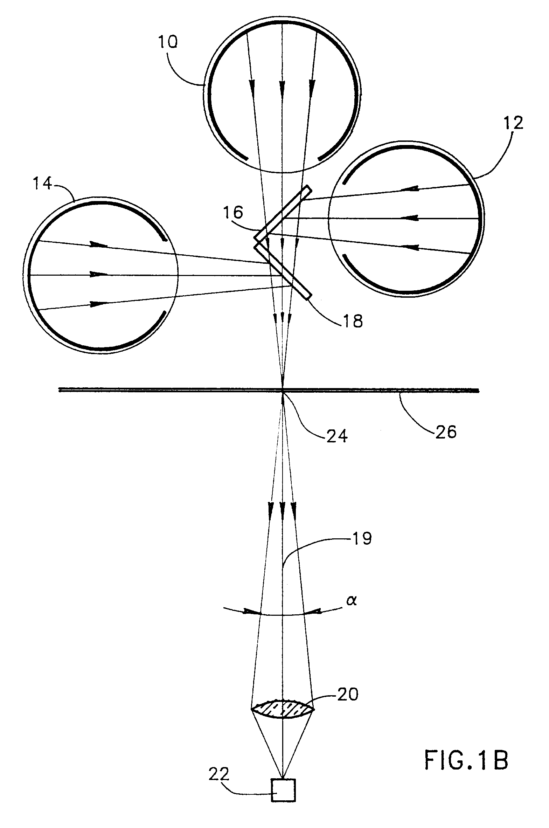

Reference is now made to Figs. 1A and 1B, which illustrate apparatus useful in three-color separation applications of a colored picture represented on a transparent medium.

As illustrated in Figs. 1A and 1B, there are provided three fluorescent lamps 10, 12 and 14, preferably comprising aperture lamps. Aperture lamps are described in an article entitled "Fluorescent Lamps", on page 7 of a publication TP-111R of General Electric, published in Dec. 1987. The lamps 10, 12 and 14 are coated with green, red and blue phosphors, respectively, and are disposed so that their lengths are perpendicular to the plane of Figs. 1A and 1B.

Also provided is a first dichroic filter 16 which, for at least a certain range of angles of incidence, is transparent to green light and reflective for red light. In the illustrated embodiment, dichroic filter 16 is arranged such that both the green and red light provided by lamps 10 and 12, respectively, impinge upon the filter 16 at a 45° angle of incidence, at which angle the filter 16 is transparent to green and reflective for red. It is noted that the response of the filter 16 to blue light is of no particular relevance.

There is further provided a second dichroic filter 18 which, for at least some angles of incidence, is transparent to red and green light and reflective for blue light. In the illustrated embodiment, dichroic filter 18 is arranged such that the red, green and blue light provided by lamps 10, 12 and 14, respectively, impinge upon the filter 18 at a 45° angle of incidence, at which angle the filter 18 is transparent to green and red and reflective for blue.

Filter 16 shifts light from lamp 10 slightly to the right, in the illustrated embodiment. In other words, each ray from lamp 10 which passes through filter 16 generally maintains its forward direction but with a slight sideways shift to the right. Lamp 12 is disposed such that its light impinges upon filter 16 at substantially the same location from which the rays from lamp 10 emerge. Therefore, the light from lamps 10 and 12 follow the same optical path after leaving filter 16.

Similarly, the merged light from lamps 10 and 12 is shifted slightly left, in the illustrated embodiment, due to the angle at which filter 18 is disposed, i.e. each ray develops a slight leftward shift. Lamp 14 is disposed such that its light impinges upon filter 18 at substantially the same location from which the rays from lamps 10 and 12 emerge. Therefore, the light from lamp 14 follows the same optical path as the light from lamps 10 and 12.

It is appreciated that configurations may be provided in which the positions of various lamps have been changed relative to the configurations of Figs. 1A and 1B if the filters are correspondingly changed. For example, if it is desired to interchange the positions of green and blue lamps 10 and 14, then filter 16 should be transparent for blue and reflective for red, and filter 18 should be transparent for blue and red and reflective for green.

As illustrated in Fig. 1A, a detector 22, typically a charge coupled device (CCD) detector, is provided in operative association to the lamps 10, 12 and 14 and filters 16 and 18. The detector 22, in this embodiment, is preferably a linear detector aligned parallel to the lamp 10. A transparency 26 is disposed between the detector 22 and the lamps and filters.

In transparency applications, the optical path of the light of the three lamps 10, 12 and 14 is required to be coincident with an optical axis 19 of the detector 22. Preferred angles, relative to the optical axis 19 of the detector 22, at which the filters 16 and 18 and the lamps 10, 12 and 14 may be oriented, are respectively, 45 degrees, 315 degrees, 0 degrees, 270 degrees and 90 degrees.

As illustrated in Fig. 1B, a lens 20 with a numerical aperture alpha may be disposed between the detector 22 and the transparency 26 for magnification purposes.

It is a feature of the configuration of Fig. 1B that the optical distances from the lamps 10, 12 and 14, to the lens 20 are equal and therefore the images of the lamps coincide.

It is a further feature of the configurations of Figs. 1A and 1B that by employing red, green and blue lamps for an RGB color separation, the light energy efficiency of the apparatus approaches 100% by not "wasting" filtered-out portions of light.

According to an alternative embodiment of the present invention, the green, red and blue lamps 10, 12 and 14 may be replaced by three white lamps. Also, according to yet a further embodiment of the present invention, any combination of three lamps, each lamp being either colored or white, may replace the lamps 10, 12 and 14 as long as each lamp contains at least some light output in the green, red and blue color ranges, respectively. It will be appreciated that the light energy efficiency of such alternative embodiments is less than the light energy efficiencies of the configurations of Figs. 1A and 1B. The actual decrease in efficiency is a function of the portions of white or colored light filtered out by the filters 16 and 18.

According to still a further embodiment of the present invention, either or each of dichroic filters 16 and 18 may be replaced by a combination filter comprising a colored glass substrate with a dichroic coating. The colored glass substrate of the combination filter is useful for fine tuning the spectral distribution emerging therefrom.

The dichroic coating may be provided on either or both surfaces of the combination filter. Depending on which surface of the filter is coated, the filter will "fine tune" the light of the different lamps accordingly. For example, if filter 16 is made from a colored glass substrate with a dichroic coating on its bottom surface, the colored glass substrate of filter 16 will filter the light from lamp 10 but not from lamp 12. However, if the dichroic coating is provided on the top surface of filter 16, then the colored glass substrate of filter 16 will filter the light from lamp 12 as well as from lamp 10. This is because the light from lamp 12 is reflected by the top surface of filter 16 rather than its bottom surface and therefore passes twice through the colored glass substrate of filter 16.

A preferred method for performing RGB color separation of a colored picture represented upon the transparency 26 will now be described. The method is referred to as "line interlace sequence" since a line 24 is scanned three times, for each of the three color separations, before the next line is scanned. The line 24 is perpendicular to the plane of Figs. 1A and 1B and parallel to detector 22.

First the red lamp 12 is flashed. The red light reflects off filter 16, passes through filter 18, and is collected by the lens 20. The "red information" is integrated by the detector 22 and subsequently stored by an acquisition system, such as a Smart Scanner, commercially available from Scitex Corporation Ltd., Herzlia, Israel. The detector 22 is then reset for a second exposure.

Next, the green lamp 10 is flashed. The green light passes through filters 16 and 18 and is collected by the lens 20. The resulting "green information" is integrated by the detector 22 and is subsequently stored by the acquisition system. The detector 22 is once again reset for the third and last exposure.

Finally, the blue lamp 14 is flashed. The blue light reflects off filter 18 and is collected by the lens 20. The "blue information" is integrated by the detector 22.

Alternatively the transparency 26 can be scanned by a method referred to as "page interlace sequence" since the entire transparency is scanned three times, each time to produce one of the three color separations.

It is noted that color separation may be realized by sequential operation of red (R), green (G) and blue (B) lamps, but may also be accomplished by sequential operation of a set of three combinations of these lamps. Each set of combinations is characterized in that no one combination is a linear combination of the other two. For example, a set of combinations can comprise the following three combinations: R + G, R + B, G + B; or R, R + G, R + G + B; or R + B, G + B, B. The last option may be effected by operating the B lamp continuously and the R lamp, the G lamp and then neither the R lamp nor the G lamp in sequence.

These and other time sequences for lamp operation which are suitable for color separation applications are described in the following documents, the disclosures of which are incorporated herein by reference: Published European Patent Application 027846 A2 and United States Patents 4,642,679 to Nagano and 4,658,289 to Nagano et al.

Some of the above combinations which involve the simultaneous operation of two or more lamps are useful, for example, in providing greater light intensity than is generally available from a single light source, white or colored. This is because each of the lamps 10, 12 and 14 can typically produce a light intensity, in its own spectral range, comparable to that of a white lamp over the full visible range.

For example, if it is desired to operate the lamps 10, 12 and 14 simultaneously, the total white light energy is potentially three times greater than that obtainable from a single white light source. In actual practice, full light efficiency is rarely available, and in the case of RGB lamps operated simultaneously, only a 250% increase can typically be achieved. The losses are typically due to the color of the phosphor which is generally broader than the desired color spectrum and therefore light energy losses are incurred by interaction of light with the filters. The final white balance is typically achievable by altering either the current passing through each lamp or the thickness of the phosphor coating of each lamp.

Depending on which set of three combinations is chosen, color separations can be performed at different intensities. For example, a saturated blue figure on a slightly desaturated blue background can be scanned using a strong yellow light, and a yellow figure on the same slightly desaturated blue background can be scanned using an ordinary blue light.

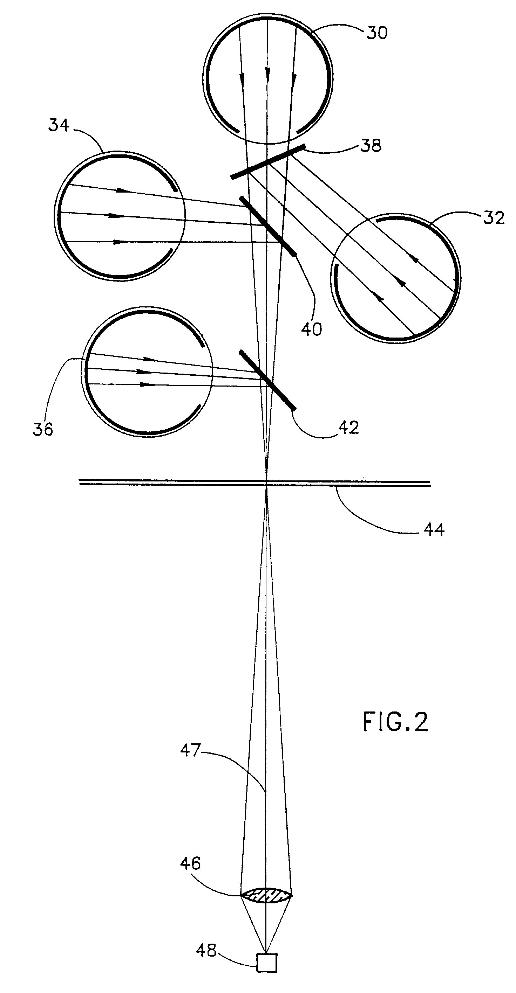

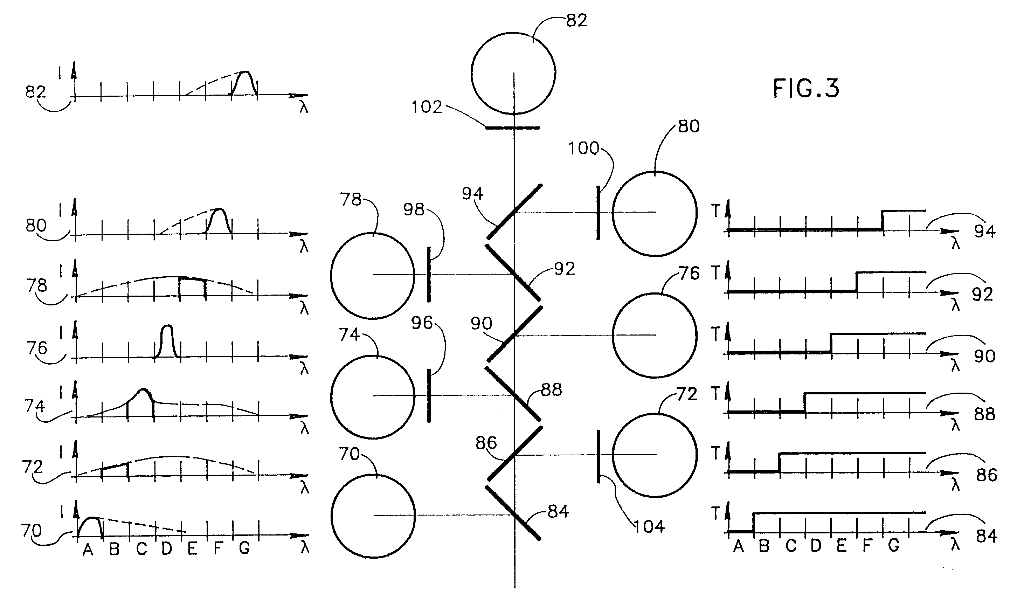

Reference is now made to Figs. 2 and 3, which illustrate apparatus useful in four-color and seven-color separation applications respectively. As may be appreciated by a comparison of Figs. 1A - 3, apparatus useful for n-color separation applications, where n is any positive integer, may also be constructed, mutatis mutandis. Two color separations may be used, for example, in pathology, in which normal tissue may be distinguished from pathological tissue by coloring the two types of tissue with different dyes.

In the embodiment of Fig. 2, there is shown apparatus which is operative to perform four-color separation, the "colors", for the purposes of illustration, being red, the 577nm mercury line, blue/green and ultraviolet (UV). Four aperture fluorescent lamps 30, 32, 34 and 36 are provided as shown. Lamp 30 has only a reflective coating and no phosphor and is utilized to provide a 577 nm mercury line. Lamp 32 has red phosphor, lamp 34 has blue/green phosphor and lamp 36 has only a reflective coating and is utilized to provide UV radiation.

Three filters 38, 40 and 42 are provided as shown. Filter 38, according to one preferred embodiment, may comprise a colored glass substrate that absorbs energy in the 200-560 nm range and a dichroic coating that reflects energy in the 590-700 nm range. Consequently, only the 577 nm mercury line from the light flashed by lamp 30 will pass through filter 38. In contrast, the red light flashed by lamp 32 will be reflected by filter 38 towards an optical axis 47 of a detector 48.

Filter 40 reflects energy in the 400-550 nm range and is transparent to light in the range 550-700nm. Consequently, blue/green light flashed by lamp 34 will be reflected by filter 40 toward optical axis 47, while the light arriving from lamps 30 and 32 via filter 38 will pass through filter 40.

Filter 42 is a dichroic filter which reflects UV energy (below 400 nm) and is transparent to visible (400 - 700 nm) light. Consequently, only the UV portion of the light flashed by lamp 36 will be reflected by filter 42 toward optical axis 47, where the light arriving from lamps 30, 32 and 34 via filter 40 will pass through filter 42.

The filters and the lamps are in operative association with a colored object 44 which is to be color separated, and with a lens 46 and detector 48.

Preferred angles relative to the optical axis 47 of the lens 46 at which the filters 38, 40 and 42 and the light sources 30, 32, 34 and 36 may be oriented, are respectively, 19 degrees, 311 degrees, 315 degrees, 0 degrees, 218 degrees, 82 degrees and 90 degrees. It will be noted from Fig. 2 that the light from the various lamps 30, 32, 34 and 36 may impinge upon the relevant filters at practically any angle as required by a particular design.

The configuration of Fig. 2 illustrates that if dictated by mechanical constraints, the optical distances of the lamps 30, 32, 34 and 36 to the lens 46 may be different. Although the images of the lamps still lie along the optical axis 47 it is not essential that the images be coincident.

In Fig. 3, seven lamps 70, 72, 74, 76, 78, 80 and 82 are provided. Intensity vs. spectral distribution graphs for each of the lamps 70 - 82 are provided on the left of Fig. 3. The "useful" parts of spectral distributions of the light emitted from lamps 70 - 82 are denoted by solid curves, labeled A, B, C, D, E, F, and G respectively, while the "wasted" parts thereof are denoted by dashed curves. It should be noted that the spectral distribution of the light emitted from lamp 76 falls only within the "useful" range D.

Spectral band pass filters 96, 98, 100, 102 and 104 are provided to limit the spectral distributions of the light emitted from lamps 74, 78, 80, 82 and 72, respectively, to the ranges denoted C, E, F, G and B.

Six dichroic filters are provided, and are numbered 84, 86, 88, 90, 92 and 94. The transmissivity curves for each of the filters, as a function of wavelength, are provided on the right of Fig. 3. Dichroic filter 84 limits the light reflected from lamp 70 to the range denoted A.

The manner of operation of the apparatus of Figs. 2 and 3 is the same as the manner of operation of the apparatus of Figs. 1A and 1B, mutatis mutandis.

One or more of the lamps illustrated in Figs.

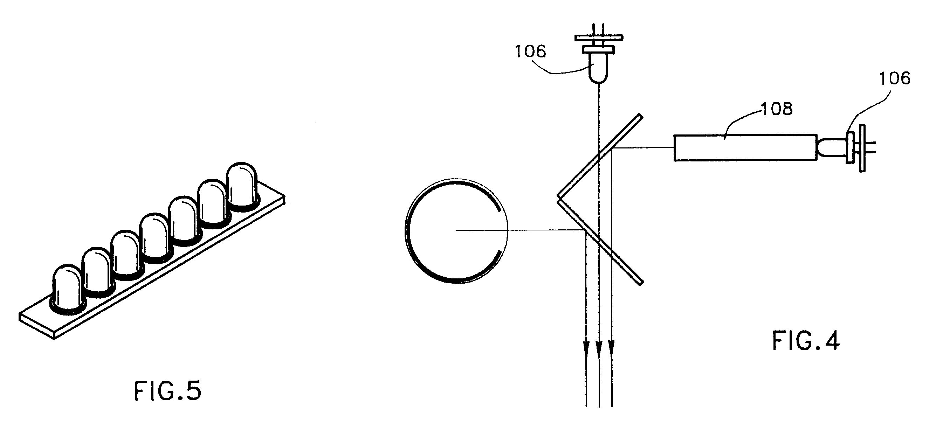

1A - 3 may, if desired, be replaced by a light emitting diode (LED) array 106 comprising a plurality of LEDs, preferably in operative association with a conventional light guide 108, as shown in Fig. 4. Fig. 5 is an illustration of an LED array 106 useful in the embodiment of Fig. 4.

It will be appreciated by persons skilled in the art that the present invention is not limited to what has been particularly shown and described hereinabove. Rather, the scope of the present invention is defined only by the claims which follow:

## Claims

1. Apparatus for separating a colored picture represented upon a transparent medium into a multiplicity of color separations comprising:

   a plurality of colored light sources generally corresponding to at least some of the multiplicity of color separations for projecting light through the transparent medium;

   means for combining the light from said plurality of light sources onto a common optical path;

   a detector, having an optical axis coincident to said common optical path, for detecting light falling thereon; and

   means for sequentially operating at least some of the plurality of light sources, thereby producing the multiplicity of color separations.

2. Apparatus according to claim 1 and also comprising a lens for focussing the light projected through said transparent medium onto said detector.

3. Apparatus according to claim 1 and wherein said plurality of colored light sources comprise three colored light sources.

4. Apparatus according to claim 3 and wherein said three colored light sources are red, blue and green light sources.

5. Apparatus according to any of the preceding claims and wherein said plurality of light sources comprises at least one fluorescent lamp.

6. Apparatus according to any of the preceding claims and wherein said plurality of light sources comprises at least one aperture fluorescent lamp.

7. A method for separating a colored picture represented upon a transparent medium into a multiplicity of color separations comprising the steps of:

   providing a plurality of colored light sources generally corresponding to at least some of the multiplicity of color separations;

combining the light of the plurality of light sources along a common optical path; and

sequentially operating at least some of the plurality of light sources, thereby producing the multiplicity of color separations.

8. A method according to claim 16 and wherein said step of sequentially operating at least some of the plurality of light sources comprises the step of simultaneously operating at least two light sources.

9. A method according to claim 16 and wherein the transparent medium is scanned with a line interlace sequence.

10. A method according to claim 16 and wherein the transparent medium is scanned with a page interlace sequence.

FIG.1A

FIG.1B

FIG.2

FIG.3

FIG.4

FIG.5